# EUROPÄISCHE PATENTSCHRIFT

(11) **EP 3 817 633 B1**
(45) Veröffentlichungstag und Bekanntmachung des Hinweises auf die Patenterteilung: **23.08.2023**
(21) Anmeldenummer: 19737027.3
(22) Anmeldetag: 01.07.2019
(51) Int. Cl.: A47J 31/52

(54) **VERFAHREN, MIT DEM KAFFEEGETRÄNKE MIT EINER VORRICHTUNG ZUM ERZEUGEN EINES KOFFEINHALTIGEN HEISSGETRÄNKS HERGESTELLT WERDEN**
METHOD BY MEANS OF WHICH COFFEE BEVERAGES CAN BE PRODUCED BY AN APPARATUS FOR PRODUCING A CAFFEINATED HOT BEVERAGE
PROCÉDÉ DE FABRICATION DE BOISSONS À BASE DE CAFÉ, ET DISPOSITIF DE FABRICATION DE BOISSONS CHAUDES CONTENANT DE LA CAFÉINE

(30) Priorität: 05.07.2018 DE 102018116306
(43) Veröffentlichungstag der Anmeldung: 12.05.2021
(73) Patentinhaber: Melitta Professional Coffee Solutions GmbH & Co. KG, 32429 Minden (DE)
(72) Erfinder: DIESTER, Thomas, 31675 Bückeburg (DE); BUCHHOLZ, Bernd, 32369 Rahden (DE); WILKE, Patrick, 31675 Bückeburg (DE)
(74) Vertreter: Specht, Peter
(86) Internationale Anmeldenummer: PCT/EP2019/067536
(87) Internationale Veröffentlichungsnummer: WO 2020/007771

(56) Entgegenhaltungen:
- EP-A1- 3 260 025
- WO-A2-2004/014781
- WO-A2-2012/085813
- DE-A1-102005 004 416
- US-A1- 2001 048 958

## Beschreibung

Die vorliegende Erfindung betrifft ein Verfahren zum Erzeugen bzw. Herstellen eines Kaffeegetränks. Dieses Erzeugen erfolgt beispielsweise in einem Kaffeevollautomaten.

Die Extraktion eines Kaffeegetränks beschreibt das Herauslösen der Aroma- und Geschmacksstoffe aus gemahlenem Kaffee, insbesondere aus dem sogenannten Kaffeemehl. Dies erfolgt während eines Brühvorgangs, wobei Wasser, vorzugsweise hei-ßes Wasser als Extraktionsmittel dient. Die Extraktionsstärke beschreibt die Menge an gelösten Aroma- bzw. Geschmacksstoffen und ist im entscheidenden Maße für die Geschmackscharakteristik des Kaffees verantwortlich. Bei einer hohen Extraktionsstärke werden anteilig viele Gerbsäuren und Bitterstoffe aus dem gemahlenen Kaffee gelöst, wodurch ein intensiver und tendenziell bitterer Kaffeegeschmack erzeugt wird. Bei einer niedrigen Extraktionsstärke hingegen werden anteilig mehr saure Bestandteile gelöst und ein "dünner" und eher wässriger Kaffee erzeugt. Die Art und Menge der gelösten Stoffe ist dabei über den Extraktionsvorgang bzw. die Extraktionszeit nicht konstant und optimale Extraktionsstärke kann abhängig sein von den gewünschten Produkteigenschaften.

Die WO 2012/085 813A2 betrifft in erster Linie die Zubereitung von Tee oder Kaffee durch druckloses Auffüllen eines Behälters, in dem sich Teeblätter befinden, mit Wasser gerichtet. Ein Kaffee würde entsprechend zubereitet. Dabei wird mit einem Sensor die Leitfähigkeit im Zubereitungsgefäß sensiert, um anzuzeigen, wenn der Brühvorgang beendet werden kann.

Die DE 10 2005 004 416 A1 offenbart eine Kaffeemaschine und ein Verfahren zur Zubereitung von Filterkaffee, wobei das zubereitete Getränk mit Licht bestrahlt wird und aus dem Messen des gestreuten Licht geschlossen wird, wann der Kaffee fertig zubereitet ist.

In der WO 2004/014781 und der US 2001/0048958 A1 erfolgen ebenfalls Leitfähigkeitsmessungen bei der Zubereitung von Getränken.

Zum Stand der Technik sei an dieser Stelle zudem die DE 10 2015 109 921 A1 genannt. Aus dieser Schrift ist ein Verfahren zum Erzeugen eines Kaffeegetränks aus Kaffeemehl mittels eines Brühvorganges an einer Kaffeemaschine mit einer Steuerungsvorrichtung sowie mit einem Brühzylinder, in dem ein Kolben beweglich angeordnet ist, der einen Kolbenantrieb aufweist, so dass das Volumen einer Brühkammer veränderlich ist, bekannt, wobei der Brühvorgang zumindest folgende Verfahrensschritte aufweist: S1: es wird eine Menge an Kaffeemehl in die Brühkammer eingefüllt; S2: durch das in die Brühkammer eingefüllte Kaffeemehl wird Wasser geleitet, um das Kaffeegetränk zuzubereiten, wobei ein Volumenstrom, insbesondere der Volumenstrom des durch die Brühkammer fließenden Wassers, als Regelgröße ermittelt und mit einem Volumenstromsollwert verglichen wird; und S3: bei im Schritt S2 ermittelten Abweichungen von einem vorgegebenen Volumenstromsollwert wird die Position des Kolbens und somit die Anpresskraft auf das Kaffeemehl in der Brühkammer als Stellgröße regelnd geändert, um den Volumenstrom auf den Volumenstromsollwert einzuregeln. Es wird somit eine Prozesseigenschaft bestimmt, um aufgrund dieser Information steuernd oder regelnd den Brühprozess zu optimieren.

Dieses Verfahren hat sich an sich gut bewährt, es sollen aber im Rahmen der vorliegenden Erfindung weitere Optionen geschaffen werden, steuernd oder regelnd den Brühprozess zu optimieren, um einen besonders gut schmeckenden Kaffee zu erzeugen. Dies ist die Aufgabe der Erfindung.

Die vorliegende Erfindung löst diese Aufgabe durch das Verfahren des Anspruchs 1.

Mit dem erfindungsgemäßen Verfahren können koffeinhaltige Heißgetränke, also Kaffeegetränke, hergestellt werden. Hierfür wird eine Vorrichtung zum Erzeugen eines koffeinhaltigen Heißgetränks genutzt. Das Verfahren kann zum Zubereiten des koffeinhaltigen Heißgetränkes genutzt werden. Dabei erfolgt insbesondere auch ein Zubereiten des koffeinhaltigen Heißgetränkes, insbesondere des Kaffeegetränks aus Wasser, insbesondere erhitztem Wasser, und einem koffeinhaltigen Ausgangsstoff, insbesondere Kaffeemehl, zumindest in einer Brüheinheit. Die eigentliche Zubereitung erfolgt zunächst durch Extraktion, also ein Herauslösen der Aroma- und Geschmacksstoffe aus dem koffeinhaltigen Ausgangsstoff, insbesondere gemahlenem Kaffee bzw. dem sogenannten Kaffeemehl. Dies erfolgt während des Brühvorgangs, wobei Wasser, vorzugsweise heißes Wasser als Extraktionsmittel dient. Das Verfahren kann weitere optionale Verfahrensschritte umfassen, so ein weiteres Ein leiten von Wasser (vorgegebener Temperatur) nach der Brüheinheit, um z.B. aus einem "Espresso" einen "Kaffee Americano" zu erzeugen. Zudem können in das aus der Brüheinheit ausgetretene Getränk auf Wunsch optional Zusatzstoffe wie Milch oder Milchschaum eingegeben werden.

Die Vorrichtung weist zumindest
a) einen Wasserzulauf von Wasser, z.B. in Form eines Wasseranschlusses oder einer Zuleitung eines Wassertanks, mit einer ersten Temperatur T1 mit einer Wasserpumpe bei einer ersten Durchflussgeschwindigkeit,
   Diese erste Temperatur kann vorzugsweise 4°C bis 30°C betragen.
b) einen Boiler zur Erwärmung des Wassers auf eine zweite Temperatur T2, welche höher ist als die erste Temperatur T1, wobei mit diesem die Erwärmung durchgeführt wird,
   Diese zweite Temperatur kann im bevorzugten Bereich von 80°C bis 96°C liegen.
c) eine Brüheinheit zur Extraktion des Kaffeegetränks aus gemahlenen Kaffee,
   Die Extraktionsstärke variiert typischerweise über den zeitlichen Verlauf der Extraktion. In der Brüheinheit wird das koffeinhaltige Getränk aus Wasser un dem Ausgangsstoff zubereitet
d) zumindest eine erste Messeinheit zur Ermittlung wenigstens einer physikalischen Stoffeigenschaft des Kaffeegetränks und/oder einer davon abhängigen physikalischen Größe und optional einer Prozesseigenschaft, und
e) eine Steuer- und/oder Regeleinheit auf, welche ausgerüstet ist zur Einstellung einer Steuergröße anhand der physikalischen Stoffeigenschaft und/oder der physikalischen Größe und optional der Prozesseigenschaft, wobei die Steuer- und/oder Regeleinheit einen Datenspeicher aufweist, auf welchem Datensätze von Sollwerten und/oder Sollwertbereichen in Abhängigkeit von der Temperatur und/oder einem gewünschten koffeinhaltigen Getränk und/oder einer zugeführten Kaffeesorte hinterlegt sind,
   Da viele der Stoffeigenschaften, so z.B. die Viskosität oder die Leitfähigkeit temperaturabhängig sind und ein typischer Brühvorgang jenseits von Standardbedingungen wie z.B. 25°C erfolgt, empfiehlt sich ein Hinterlegen mehrerer Sollwerte der Stoffeigenschaft mit der jeweiligen Temperatur.
   Das Verfahren weist sodann zumindest die folgenden Schritte auf:
      A) Ermitteln der physikalischen Stoffeigenschaft und/oder der physikalischen Größe und optional der Prozesseigenschaft des koffeinhaltigen Heißgetränks durch zumindest die erste Messeinheit;
      B) Durchführen eines Vergleiches mit der Steuer- und/oder Regeleinheit zwischen einem Ist-Wert und einem Sollwertbereich dieser physikalischen Stoffeigenschaft, physikalischen Größe und optional Prozesseigenschaft, wobei die Steuer- und/oder Regeleinheit den Datenspeicher nutzt, auf welchem Datensätze von Sollwerten und/oder Sollwertbereichen in Abhängigkeit von der Temperatur und/oder einem gewünschten koffeinhaltigen Heißgetränk und/oder einer zugeführten Kaffeesorte hinterlegt sind,
      C) wobei, sofern der Istwert außerhalb des Sollwertbereiches liegt, mit der Steuer- und/oder Regeleinheit ein Einstellen zumindest einer Stellgröße im Verfahren erfolgt, derart, dass die physikalische Stoffeigenschaft und/oder die physikalischen Größe und optional die Prozesseigenschaft des ausgegebenen koffeinhaltigen Heißgetränkes steuernd oder regelnd beeinflusst wird,
      D) wobei während der Extraktion Presskräfte auf den gemahlenen Kaffee ausgeübt werden, wobei die Stellgröße die Motorleistung zur Aufwendung der Presskräfte ist.

Vorteilhafte Ausgestaltungen des Verfahrens sind der Gegenstand der Unteransprüche.

Besonders vorteilhaft ist, dass anstelle oder über Prozesseigenschaften hinaus (wie in der DE 10 2015 109 921 A1) nunmehr auch oder nur eine Stoffeigenschaft berücksichtigt wird und/oder eine davon abhängige physikalische Größe, was es erlaubt, den Zubereitungsprozess noch besser steuernd oder regelnd zu gestalten, um immer wieder einen hervorragend zubereiteten und sehr gut schmeckenden Kaffee zu erhalten.

Derart kann insbesondere die Extraktionsstärke, insbesondere produkt- und/oder nutzerindividuell, auf einfache Weise durch Steuerung oder Regelung variiert werden.

Die Steuer- und/oder Regeleinheit kann während eines Bezuges nach einer Variante ein nicht konstantes und während des Bezuges veränderbares Profil von Sollwerten und/oder Sollwertbereichen bestimmen und danach die Steuerung vornehmen. Dies erhöht die Genauigkeit des Herstellungsvorgangs, da die Extraktionsstärke während des zeitlichen Verlaufs des Brühens abnimmt.

Bei der wenigstens einen physikalischen Stoffeigenschaft kann es sich nach einer besonders vorteilhaften Variante vorteilhaft um die elektrische Leitfähigkeit des koffeinhaltigen Heißgetränks handeln.

Bei der Prozesseigenschaft kann es sich vorteilhaft um die Brühdauer des koffeinhaltigen Heißgetränks handeln.

Zur Erstellung der Stellgröße kann der Istwert der elektrischen Leitfähigkeit und der Istwert einer ermittelten Temperatur des koffeinhaltigen Heißgetränks gegenüber einem jeweiligen Sollwert verglichen werden.

Die wenigstens eine von einer physikalischen Stoffeigenschaft abhängige physikalische Größe kann vorzugsweise der Brechungsindex des koffeinhaltigen Heißgetränks sein.

Ein weiteres Zuleiten von Wasser, insbesondere von heißem Wasser aus dem Boiler, kann nach der Brüheinheit erfolgen, wobei die Stellgröße das Volumen des Wassers ist oder die Zeit ist, mittels welcher ein im Wesentlichen konstanter Volumenstrom an Wasser zugeführt wird.

Das Wasservolumen ändert zugleich auch die Konzentration und somit z.B. auch den Brechungsindex, die Leitfähigkeit oder andere Stoffeigenschaften.

Das Einstellen in Schritt C kann derart erfolgen, dass ein Anfangsvolumen an koffeinhaltigem Heißgetränk umgeleitet und somit nicht in das Getränk eingeführt wird. Da der zeitlich erste zubereitete Anteil des koffeinhaltigen Heißgetränkes einen höheren Anteil an Bitterstoffen enthält, beeinflusst dessen Ablauf bzw. das Nicht-zuleiten dieses Anteils in das Getränk eine Änderung der Zusammensetzung und damit der physikalischen Stoffeigenschaften.

Ein weiteres Beimischen von Wasser in das aus der Brüheinheit fließende Getränk kann vorteilhaft durch ein elektrisch verstellbares Stellglied, insbesondere durch ein Drosselventil, erfolgen.

Während der Extraktion kann ferner ein Anpressdruck auf das Wasser bei dessen Durchleitung durch den gemahlenen Kaffee ausgeübt werden, wobei als Stellgröße vorzugsweise die Leistung der Wasserpumpe verwendet werden kann.

Die Extraktion kann durch Steuerung und/oder Regelung auf einen Sollwertbereich zumindest einer oder mehrerer physikalischer Stoffeigenschaften, physikalischer Größen und - optional - einer oder mehrerer Prozesseigenschaften erfolgen.

Die Extraktion kann durch kontinuierliche Regelung auf einen Sollwertbereich zumindest einer oder mehrerer physikalischer Stoffeigenschaften, physikalischer Größen und optional - einer oder mehrerer - Prozesseigenschaften erfolgen.

Die Steuerung und/oder Regelung kann durch Ermitteln eines Extraktionsprofils und durch Vergleich mit zumindest einem Extraktionsprofil, welches als Sollwert-Datensatz auf dem Datenspeicher hinterlegt ist, erfolgen.

Die vorgenannten Stellgrößen können durch ein Regel- und/oder Steuersignal übertragen werden. Alternativ zu Stellgrößen kann es sich auch um Regelgrö-ßen handeln.

Weiterhin vorteilhaft ist ein Getränkeautomat, welcher eine Messeinheit mit einem der mehreren Sensoren, sowie eine Steuer- und/oder Auswerteeinheit, aufweist welche ausgerüstet ist zur Ausführung des vorgenannten erfindungsgemäßen Verfahrens.

Nachfolgend wird die Erfindung in mehreren Ausführungsvarianten anhand der beiliegenden Figuren näher erläutert, wobei die Erfindung nicht auf die konkreten dargestellten Ausführungsvarianten beschränkt ist. Es zeigt:
- Fig. 1:: eine schematische Darstellung verschiedener Ausführungsvarianten zur Ausführung eines Verfahrens zum Erzeugen eines erfindungsgemäßen Heißgetränks;
- Fig. 2:: eine schematische Darstellung einer ersten in Fig. 1 dargestellten Ausführungsvariante;
- Fig. 3:: eine schematische Darstellung einer zweiten in Fig. 1 dargestellten Ausführungsvariante;
- Fig. 4:: eine schematische Darstellung einer dritten in Fig. 1 dargestellten Ausführungsvariante; und
- Fig. 5:: eine schematische Darstellung einer vierten in Fig. 1 dargestellten Ausführungsvariante.

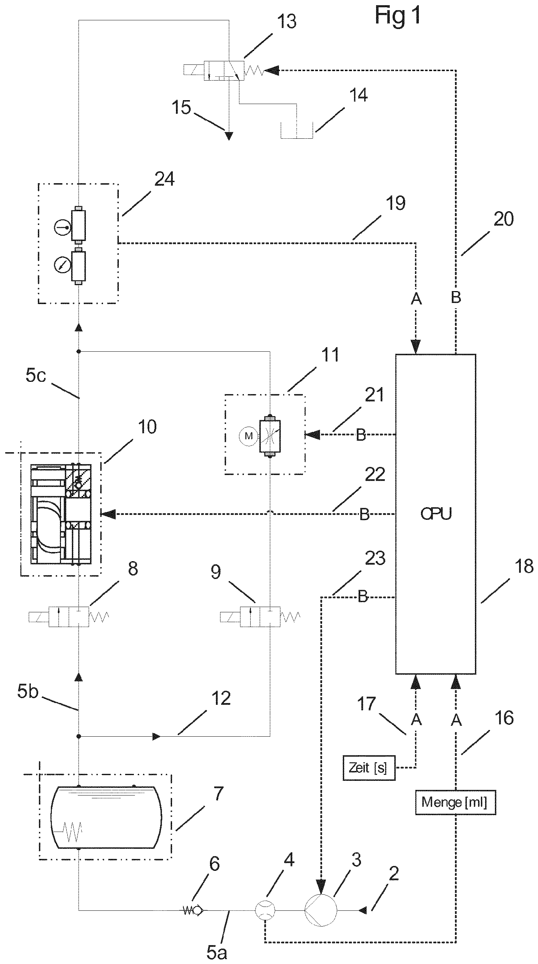

Fig. 1 zeigt ein Verfahren für einen Kaffeezubereitungsprozess in Abhängigkeit der bekannten und/oder gemessenen Extraktion bzw. von extraktionsbeeinflussenden Größen angepasst und beeinflusst wird. Die Beeinflussung kann dabei in Abhängigkeit einer messbaren physikalischen Größe z.B. Zeit oder Wassermenge, auf Grundlage von hinterlegten Vorgaben, und/oder der Messung und Beurteilung einer messbaren physikalischen Stoffeigenschaft z.B. der elektrischer Leitfähigkeit oder des Brechungsindex, welche einen Rückschluss auf die Extraktion ermöglicht, erfolgen.

Unter einer Stoffeigenschaft ist dabei eine stoffspezifische Größe zu verstehen, wie z.B. die Leitfähigkeit oder die Viskosität, welche Stoff bzw. von Stoffgemisch zu Stoffgemisch variieren kann. Oftmals werden auch lediglich abhängige physikalische Größen gemessen, beispielsweise kann bei der thermischen Leitfähigkeit strömenden eines Mediums kann die Temperatur des Mediums und dessen zeitliche Veränderung an zwei unterschiedlichen Stellen gemessen werden.

Demgegenüber ist eine Prozesseigenschaft eine Eigenschaft, welche von dem Prozess und der Prozessführung abhängt. Dies ist z.B. die Mediumstemperatur oder der Volumen- und/oder Massedurchfluss eines Mediums, welcher nicht stoffspezifisch ist sondern prozessabhängig. Nur diese wurden nach dem eingangs genannten Stand der Technik berücksichtigt. Dies ist nach dem Stand der Technik optional weiterhin möglich. Primär werden jedoch zunächst eine Stoffeigenschaft oder eine davon abhängige physikalische Größe zur Steuerung oder Regelung benutzt.

Die Beeinflussung der ermittelten Stoffeigenschaften und ggf. Prozesseigenschaften auf den Zubereitungsprozess des koffeinhaltigen Heißgetränks kann passiv erfolgen, durch das Entsorgen von, nicht im Sollbereich befindlichen, Kaffeemengen. So können erste oder letzte aus der Brühkammer austretende Mengen an Kaffee nicht ausgegeben werden und stattdessen entsorgt werden, beispielsweise um einen Kaffee ohne Crema zu erzeugen. Die Beeinflussung kann aber auch aktiv erfolgen, z.B. durch eine Veränderung der Extraktion bzw. des Extrakts, insbesondere auch während der Zubereitung.

Nach einer Variante kann eine Entsorgung des ersten Teils einer z.B. Espresso Zubereitung, vorzugsweise in Abhängigkeit der gemessenen Extraktionsstärke, vorteilhaft vorgesehen sein. Dies, da sich verstärkt in diesem ersten Teil der Zubereitung unerwünschte Stoffe im Extrakt befinden können. Diese unerwünschten, da den Geschmack negativ beeinflussenden Stoffe, sind beispielsweise das Bohnenfett, welches sich auf der Oberfläche der zu mahlenden Kaffeebohne befunden hat und dort durch Sauerstoffkontakt oxidiert ist, und/ oder ein, bei feinen Mahlgraden entstehender, Mahlstaub Anteil. Beide Stoffe haben einen ranzigen und flachen Geschmack zu Folge, welcher vermieden werden kann, wenn diese vorab der Ausgabe "ausgespült" werden.

Im Markt erfreuen sich zudem Filterkaffeegetränke wieder zunehmender Beliebtheit und die Herstellung eines vergleichbaren Geschmacksprofils auf einem Kaffeevollautomaten ist daher ein klares Kaufkriterium für den Anwender. Das geforderte Geschmacksprofil eines Filterkaffees unterscheidet sich auf Grund der unterschiedlichen Zubereitungsarten, Brühsysteme und Mahlgrade zu einem mit einem Kaffeevollautomaten hergestellten ähnlichen Produkttyp deutlich. Ein Kaffeegetränk mit ähnlicher Charakteristik (Keine Crema, wenig Bitterstoffe, kaum Säure, etc.) ist auf einem Kaffeevollautomaten mit Kolbenbrühsystem am besten abbildbar, wenn anhand von hinterlegten Extraktionsprofilen dem extrahierten Kaffee Heißwasser geregelt beigemischt wird. Die Beimischung kann daher in diesem Fall parallel zum Brühvorgang erfolgen, die Wassermenge/ Volumenstrom kann konstant oder vorzugsweise veränderbar sein und kann vorzugweise auch einmal oder laufend überwacht werden. Durch dieses Vorgehen kann ein Lösen von unerwünscht hohen Konzentrationen an Bitterstoffen und Säuren vermieden werden, welche sonst auch bei einem vollständig Nachträglichen "verdünnen" des Kaffees deutlich wahrnehmbar bleiben würden. So können aus den verhältnismäßig geringen Einwaagen mit hoher Extraktionsstärke eines Kolbensystems die spezifischen Geschmacksmuster einer Filterkaffeeherstellung nachempfunden werden.

Mit einem solchen System/ Verfahren ist es möglich, Kundenwünsche und Anforderungen an das Geschmacksprofil des Kaffees produktindividuell einzustellen und reproduzierbar herzustellen, sowie Schwankungen z.B. der Kaffeemehlmenge zu kompensieren.

Fig. 1 zeigt eine erste Ausführungsvariante eines Getränkeautomaten 1 gemäß der vorliegenden Erfindung. Die dargestellte Ausführungsvariante umfasst mehrere Optionen einer extraktionsabhängigen Zubereitung eines koffeinhaltigen Heißgetränks. Diese Optionen lassen sich selbstverständlich auch gesondert in einer Vielzahl weiterer Ausführungsvarianten des Verfahrens analog oder in abgewandelter Form umsetzen.

Der Getränkeautomat 1 ist hier als Kaffeevollautomat ausgebildet. Er weist einen Wasseranschluss 2 auf, welcher beispielsweise an einen herkömmlichen Wasserhahn, eine Hausleitung oder dergleichen angeschlossen sein kann.

Ausgehend dem Wasseranschluss 2 erstreckt sich eine Zulaufleitung 5a. Entlang der Zulaufleitung ist eine Pumpe 3 angeordnet, welche das dem Getränkeautomaten 1 zugeführte Wasser fördert und/oder mit einem Druck beaufschlagen.

Die Zulaufleitung 5a führt bis zu einem das Wasser erhitzenden Boiler 7. Dort geht die Zulaufleitung in eine Heißwasserleitung 5b über. Die Durchflussgeschwindigkeit in der Zulaufleitung 5a oder der Heißwasserleitung 5b kann durch ein Durchflussmessgerät 4 zur Überwachung des jeweiligen Volumen- und/oder Massenstroms in Heißwasserleitung erfolgen. Bei dem Durchflussmessgerät kann es sich beispielsweise um ein Flügelrad-Durchflussmessgerät oder ein magnetisch-induktives Durchflussmessgerät handeln.

Strömungstechnisch hinter dem Durchflussmessgerät 4 ist entlang der Zulaufleitung 5a ein Rückschlagventil 6, insbesondere ein federbelastetes Rückschlagventil 6, angeordnet. Danach mündet die Zulaufleitung 5a in den Boiler 7, welcher das zugeführte Wasser auf eine Temperatur im bevorzugten Bereich von 80°C bis 96°C erhitzt.

Das durch die Zulaufleitung 5a-dem Boiler 7 zugeführte Wasser kann Kaltwasser, z.B. mit einer Temperatur zwischen 4°C bis 30°C, sein.

Strömungstechnisch hinter dem Boiler 7 ist ein Wegeventil 8, das hier vorzugsweise als 2/2 Wegeventil ausgebildet ist, insbesondere als elektrisch betätigtes 2/2 Wegeventil mit Rückstellung durch eine Feder, angeordnet, zur Weiterleitung einer diskreten Wassermenge in eine Brüheinheit 10.

Das Wegeventil 8 kann mit einer Steuer- und/oder Auswerteeinheit 18 des Getränkeautomaten in Wechselwirkung stehen bzw. drahtlos oder drahtgebunden kommunizieren. So ist es möglich, dass in Abhängigkeit von dem vom Nutzer gewählten Getränk, definiert weniger oder mehr Wasser der Brüheinheit 10 zugeführt wird. Beispielsweise wird für verschieden große Kaffees verschieden viel Wasser benötigt.

In der Brüheinheit 10 befinden sich die Ingredienzien zur Zubereitung des koffeinhaltigen Heißgetränks. Dabei kann es sich vorzugsweise um gemahlenen Kaffee handeln. In die Brüheinheit wird Wasser geleitet. In der Brüheinheit 10 erfolgt somit das Bereitstellen des koffeinhaltigen Heißgetränks durch Extraktion mit einer Temperatur von typischerweise über 70°C.

Aus der Brüheinheit 10 fließt das zubereitete Heißgetränk in eine Ausgabeleitung 5C.

Zwischen dem Boiler 7 und dem Wegeventils 8 zweigt von der Heißwasserleitung 5B eine Bypass-Leitung 12 ab. Entlang der Bypass-Leitung 12 ist ein Wegeventil 9, vorzugsweise als 2/2 Wegeventil ausgebildet, insbesondere als elektrisch betätigtes 2/2 Wegeventil mit Rückstellung durch eine Feder, angeordnet, zur Weiterleitung einer diskreten Heiß-Wassermenge in eine durch die Brüheinheit 9 zubereitete Menge an koffeinhaltigen Heißgetränk, insbesondere von Kaffee. Derart kann der zubereitete Kaffee mit dem Heißwasser verdünnt werden. Die Bypassleitung 12 dient zum Bypass der Brüheinheit. Mit ihr kann Heißwasser aus dem Boiler 7 und der Heißwasserleitung 5b unter Umgehung der Zubereitungseinheit 10 direkt in den aus der Brüheinheit 10 ausfließenden Kaffee eingeleitet werden. Dazu mündet die Heißwasserleitung 5b die die Ausgabeleitung 5c.

Entlang der Bypass-Leitung 12 ist strömungstechnisch hinter dem Wegeventil 9 ein Stellglied11 angeordnet, das zur Steuerung und/oder Regelung der Menge der durch die Bypass-Leitung zugeführten Wassermenge dient. Das Stellglied 11 kann als ein elektrisch- verstellbares Drosselventil ausgebildet sein.

Vorzugsweise hinter dem Zulauf bzw. dem Einmündungsbereich der Bypass-Leitung 12 zurück in die Aufgabeleitung 5c sowie hinter der Brüheinheit 10 bzw. zu dem koffeinhaltigen Getränks ist eine Messeinheit 24 angeordnet. Die Messeinheit 24 kann eine oder mehrere Sensoren aufweisen.

Schließlich wird das koffeinhaltige Heißgetränk an eine Ausgabeeinheit 15 weitergeleitet Diese kann ein Umlenkventil in Form eines Wegeventils, vorzugsweise als 3/2 Wegeventil, insbesondere als elektrisch betätigtes 3/2 Wegeventil mit Rückstellung durch eine Feder, umfassen. Die Ausgabeeinheit 15 dient zur Abgabe des Getränkes in der Ausgabeleitung 5c in ein Gefäß, z.B. einer Tasse oder einen Becher. Üblicherweise kann die Ausgabeeinheit 15 eine oder mehrere weitere Leitungen 14, z.B. zur Ableitung in eine Ablaufschale oder in einen Abfluss, aufweisen. Das Umlenkventil 13 leitet das koffeinhaltige Heißgetränk somit entweder in Richtung der Ausgabe oder in die Leitung 14 zur Abführung in den Abfluss oder die Ablaufschale.

Fig. 1 zeigt mehrere Optionen von Kühlungen, deren Position im Verfahren bzw. im Getränkeautomaten variieren kann und welche auch teilweise lediglich optional vorgesehen sein können. Diese Optionen werden nachfolgend nochmals kurz erörtert.

Die Kaltwasserzuführung erfolgt in Fig. 1 nach dem Brühvorgang in der Brüheinheit 11. Es sind auch andere Positionen der Kaltwasserzuführung möglich.

Die Regelung der Kaltwasserzuführung erfolgt in Abhängigkeit von der Mischtemperatur, welche durch den Temperatursensor erfasst wird. Auch hier kann die Temperatur an einer anderen Position erfasst werden. Weiterhin ist auch eine Regelung anhand einer anderen Temperatur, z.B. der Temperatur des Heiß- und/oder des Kaltwassers vor dem Zusammenführen, möglich.

Das zugeführte Kaltwasser eines zubereiteten Getränkes kann eine optional vorgesehene erste Kühlvorrichtung ergänzend bzw. weiter gekühlt werden.

Eine indirekte Nachkühlung kann durch eine optionale zweite Kühlvorrichtung erfolgen (hier nicht dargestellt).

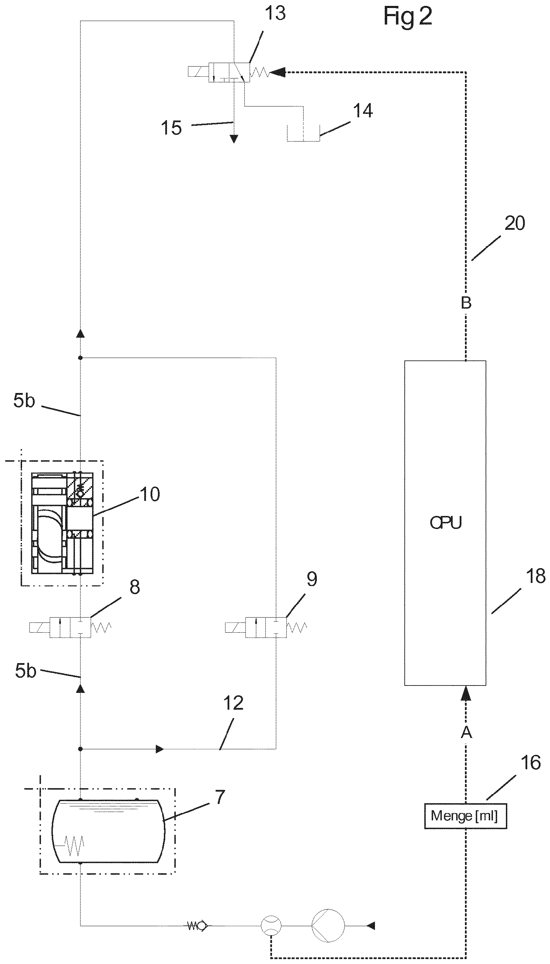

Fig. 2 zeigt eine erste bevorzugte Ausführungsvariante der Verfahrenssteuerung aus Fig. 1. Diese kann separat als Variante der Fig. 2 oder als Teil einer komplexeren Vorrichtung nach Fig. 1 umgesetzt werden. Analoges gilt für die Figuren 2 bis 5.

Mittels des Durchflussmessgerätes 5 der Fig. 1 kann der Volumen und/oder Massendurchfluss in der Zulaufleitung 5a als Messsignal 16 an die Steuer- und/oder Auswerteeinheit 18 übermittelt werden. Bei dieser Variante können somit eines oder mehrere Steuer- und/oder Regelsignale 20 in Abhängigkeit der Wassermenge pro Zeiteinheit beim Herstellungsprozess durch die Steuer und/oder Auswerteeinheit 18 erzeugt werden. Diese stellen oder regeln eine Stellgröße bzw. Regelgröße ein.

Ein entsprechendes Steuer- und/oder Regelsignal 20 kann beispielsweise an das Umlenkventil 13 abgegeben werden. Bei dieser Variante der Beeinflussung können entsprechend der genutzten Abhängigkeit definierte Kaffeemengen, die nicht im Sollbereich der Extraktion liegen, in den Abfluss entsorgt und somit nicht in das Getränke geleitet werden.

Ein vorab definierter Anteil (z.B. zu Beginn der Extraktion) einer, einem bestimmten Produkt individuell zugewiesene und eingestellte, Kaffeemenge des Brühvorgangs wird somit über das Durchflussmessgerät gemessen.

Die eingestellte Kaffeemenge, des definierten Anteils, wird über das Umlenkventil 13 in die Leitung 14 geleitet und somit nicht in das Getränk ausgegeben. Dies kann nach einem festen Zeitintervall erfolgen oder bis zu einer Änderung der Durchflussmenge erfolgen.

Mit dieser passiven Beeinflussung können z.B. Bitterstoffe, die vermehrt zu Beginn der Extraktion gelöst werden, nicht ins Getränk gelangen.

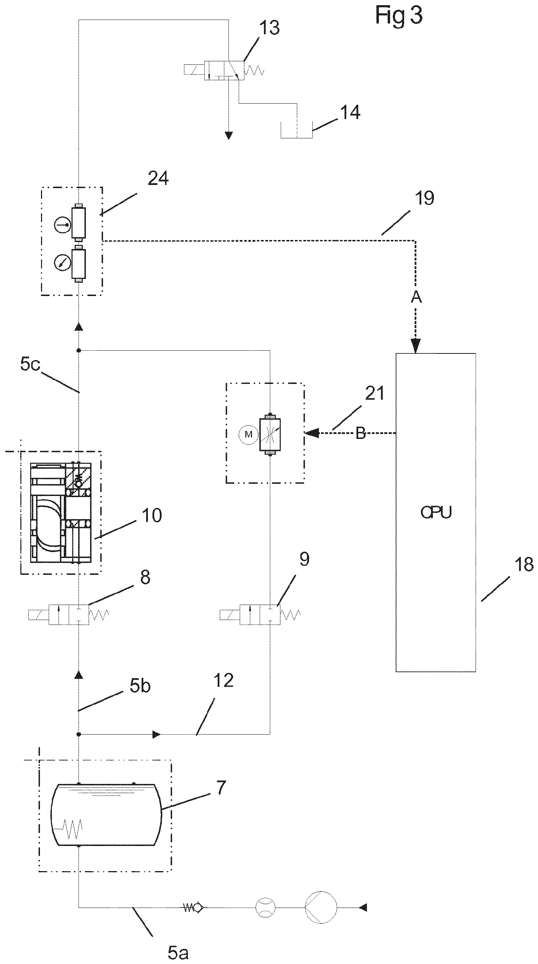

In Fig. 3 wird eine physikalische Stoffeigenschaft an der Messeinheit 24 ermittelt. Eine physikalische Stoffeigenschaft kann insbesondere ausgesucht sein aus den folgenden Größen: Leitfähigkeit in mS/cm, TDS (total dissolved solids) in ppm, Brechungsindex in Grad Brix, Dichte in kg/m³, Viskosität in Pa*s. Zusätzlich oder alternativ zu den vorgenannten Stoffgrößen kann zudem die Temperatur in °C des frisch aufgebrühten koffeinhaltigen Heißgetränks bestimmt werden.

Bei dieser Variante können somit Aktionen und Reaktionen in Abhängigkeit eines Messwertes durchgeführt werden, welcher im laufenden Herstellungsprozess zwischen Brüheinheit und Ausgabe aufgenommen wird. Aus diesem Messsignal 19 kann sodann ebenfalls ein Steuer- und/oder Regelsignal 21 durch die Steuer- und/oder Auswerteeinheit 18 generiert werden.

Die Extraktionsstärke des Kaffees wird, nach dem Brühvorgang, über die Messeinheit 24 bestimmt und mit einem, produktindividuell zugewiesenen und eingestellten Sollwertbereich verglichen. Dieser Sollwertbereich kann als Datensatz auf einem Datenspeicher der Steuer- und/oder Auswerteeinheit 18 hinterlegt sein.

In Abhängigkeit der Messwerte kann dem Kaffee, über das Stellglied 11, z.B. in Form eines ein automatisch stellbaren Drosselventils, Heiß- und/oder Kaltwasser zugeführt und die Extraktionsstärke des Getränks somit aktiv beeinflusst werden.

In Fig. 3 ist lediglich die Heißwasserzufuhr dargestellt, es ist allerdings auch vorstellbar, dass eine Abzweigung z.B. als Bypass-Leitung vor dem Boiler 7 angeordnet sein kann.

Die Messung und Beeinflussung kann laufend durchgeführt werden, wodurch sich mit der kontinuierlichen Wiederholung des Vorgangs eine Regelung ergibt, welche die Einhaltung der Sollbereiche fortlaufend überwacht.

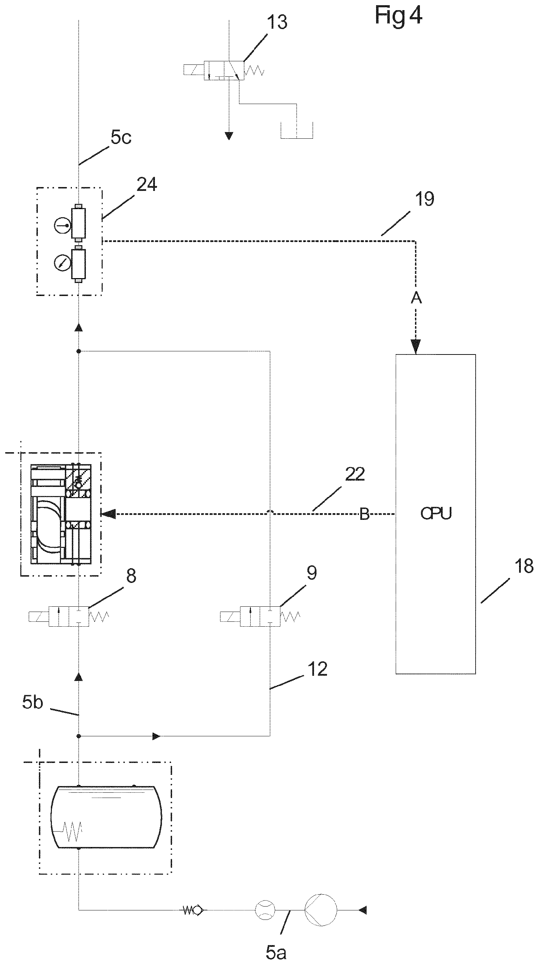

Fig. 4 zeigt eine Ermittlung eines Messsignals 19 analog zu Fig. 3, wobei die Steuer- und/oder Regeleinheit 18 in diesem Fall ein Steuer- und/oder Regelsignal 22 generiert, mit welchem die Presskräfte zum Verdichten des gemahlenen Kaffees bzw. des Kaffeemehls beeinflusst werden oder aber die Presskräfte auf einen Kolben welcher die Flüssigkeit durch den gemahlenen Kaffee presst.

Bei dieser Variante der Beeinflussung können entsprechend der genutzten Abhängigkeit ggf. automatisch geregelt die Presskräfte in der Brüheinheit angepasst und somit, über die Kontakt-/ Extraktionszeit, auf Abweichung vom Sollbereich der Extraktion reagiert werden. Die Extraktionsstärke des Kaffees wird somit nach dem Brühvorgang, über die Messeinheit 24 bestimmt und, analog zu Fig. 2, mit einem, produktindividuell zugewiesenen und eingestellten, Sollwertbereich verglichen.

In Abhängigkeit des Messsignals 19 wird das in der Brüheinheit 10 befindliche Kaffeemehl stärker oder weniger stark verpresst, wodurch die Kontaktzeit bzw. Extraktionszeit entsprechend verlängert oder verkürzt wird und die Extraktionsstärke entsprechend zu- oder abnimmt.

Die Messung und Beeinflussung kann laufend durchgeführt werden, wodurch sich mit der kontinuierlichen Wiederholung des Vorgangs eine Regelung ergibt, welche die Einhaltung der Sollbereiche fortlaufend überwacht.

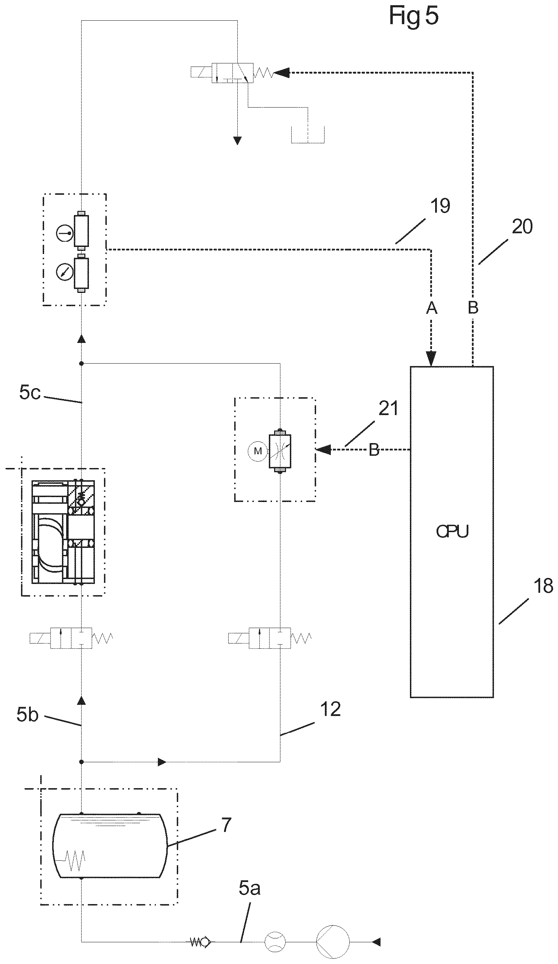

Fig. 5 zeigt eine Variante der Erfindung in welcher sowohl eine passive Beeinflussung analog zu Fig. 2 durch Ableitung eines Teils des koffeinhaltigen Heißgetränks erfolgt und eine aktive Beeinflussung durch Zuleiten des Heiß- und/oder Kaltwassers, analog zu Fig. 3.

Dabei wird ein vorab definierter Extraktionsbereich, z.B. ein hoher Bereich, welcher größer ist als eine vorgegebene Extraktionsstärke X zu Beginn des Brühvorgangs, mit bzw. an der Messeinheit 24 bestimmt und über das Umlenkventil 13 in den Abfluss geleitet.

Nach der Entsorgung eines Teilvolumens des koffeinhaltigen Heißgetränks, z.B. der Anteil mit besonders hohen Bitterstoffen, wird in Abhängigkeit des Messsignals 19 dem Extrakt, über das Stellglied 11, welches vorzugsweise als ein automatisch verstellbares Drosselventil ausgebildet ist, Heißwasser und/oder Kaltwasser zugeführt und die Extraktionsstärke des Getränks wird somit aktiv in den Sollbereich geregelt.

Die Entsorgung des überextrahierten Kaffeeanteils und der folgende kontinuierliche Regelprozess ermöglichen die Getränkezubereitung in einem definierten Extraktionsbereich, über den kompletten Brühvorgang.

Ein weiteres in Fig. 1 dargestellten Steuer- und/oder Regelsignal 23 kann zur Einstellung oder Regelung des Brühwasservolumenstromes genutzt werden. Bei dieser Variante der Beeinflussung kann entsprechend der genutzten Abhängigkeit ggf. automatisch geregelt der, der Brüheinheit zugeführte, Heißwasservolumenstrom angepasst und somit auf Abweichung vom Sollbereich der Extraktion reagiert werden.

Die in Fig. 1 dargestellten Varianten der Abhängigkeiten [A] und Beeinflussungen[B] können in vorteilhafter Form kombiniert werden, was die Nutzungsweisen eines solchen Systems/ Verfahrens erweitert. Bei den vorgenannten beschriebenen Ausführungsbeispielen können die Rahmenbedingungen (Wassermengen, Getränkegröße, Mahlgrad, Extraktions-Sollbereiche und Kaffeeeigenschaften) bekannt und/oder einstellbar sein.

### Bezugszeichen

- 1: Getränkeautomat
- 2: Wasseranschluss
- 3: Pumpe
- 4: Durchflussmessgerät
- 5: 5a Zulaufleitung, 5b Heißwasserleitung, 5c Ausgabeleitung
- 6: Rückschlagventil
- 7: Boiler
- 8: Wegeventil
- 9: Wegeventil
- 10: Brüheinheit
- 11: Stellglied
- 12: Bypass-Leitung
- 13: Umlenkventil
- 14: Ableitung
- 15: Ausgabeeinheit
- 16: Messsignal
- 17: Messsignal
- 18: Steuer- und/oder Auswerteeinheit
- 19: Messsignal
- 20: Steuer- und/oder Regelsignal
- 21: Steuer- und/oder Regelsignal
- 22: Steuer- und/oder Regelsignal
- 23: Steuer- und/oder Regelsignal
- 24: Messeinheit

## Patentansprüche

1. Verfahren, mit dem koffeinhaltige Heißgetränke, das heisst Kaffeegetränke, mit einer Vorrichtung, insbesondere einem Getränkeautomat (1), zum Erzeugen eines koffeinhaltigen Heißgetränks, aus Wasser und einem koffeinhaltigen Ausgangsstoff, insbesondere Kaffeemehl, zumindest in einer Brüheinheit (10) durch Extraktion hergestellt werden, wobei die Vorrichtung zumindest aufweist:
a) einen Wasserzulauf von Wasser mit einer ersten Temperatur T1 mit einer Wasserpumpe (3) bei einer ersten Durchflussgeschwindigkeit;
b) einen Boiler (7) zur Erwärmung des Wassers auf eine zweite Temperatur T2, welche höher ist als die erste Temperatur T1;
c) eine Brüheinheit (10) zur Extraktion des Kaffeegetränks aus gemahlenen Kaffee;
d) zumindest eine erste Messeinheit zur Ermittlung wenigstens einer physikalischen Stoffeigenschaft des Kaffeegetränks und/oder einer davon abhängigen physikalischen Größe und optional einer Prozesseigenschaft;
e) eine Steuer- und/oder Regeleinheit (18), welche ausgerüstet ist zur Einstellung einer Steuergröße anhand der physikalischen Stoffeigenschaft und/oder der physikalischen Größe und optional der Prozesseigenschaft, wobei die Steuer- und/oder Regeleinheit (18) einen Datenspeicher aufweist, auf welchem Datensätze von Sollwerten und/oder Sollwertbereichen in Abhängigkeit von der Temperatur und/oder einem gewünschten koffeinhaltigen Getränk und/oder einer zugeführten Kaffeesorte hinterlegt sind,
wobei das Verfahren weiter zumindest folgende Schritte aufweist:
A) Ermitteln der physikalischen Stoffeigenschaft und/oder der physikalischen Größe und optional der Prozesseigenschaft des koffeinhaltigen Heißgetränks durch zumindest die erste Messeinheit (4 oder 24);
B) Durchführen eines Vergleiches mit der Steuer- und/oder Regeleinheit (18) zwischen einem Ist-Wert und einem Sollwertbereich dieser physikalischen Stoffeigenschaft und/oder der physikalischen Größe und optional der Prozesseigenschaft, wobei die Steuer- und/oder Regeleinheit (18) den Datenspeicher nutzt, auf welchem Datensätze von Sollwerten und/oder Sollwertbereichen in Abhängigkeit von der Temperatur und/oder einem gewünschten koffeinhaltigen Heißgetränk und/oder einer zugeführten Kaffeesorte hinterlegt sind,
C) wobei, sofern der Istwert außerhalb des Sollwertbereiches liegt, mit der Steuer- und/oder Regeleinheit (18) ein Einstellen zumindest einer Regel- und/oder Stellgröße im Verfahren erfolgt, derart, dass eine physikalische Stoffeigenschaft, insbesondere die vorgenannte physikalische Stoffeigenschaft, des ausgegebenen koffeinhaltigen Heißgetränkes steuernd oder regelnd beeinflusst wird, und
D) wobei während der Extraktion Presskräfte auf den gemahlenen Kaffee ausgeübt werden, wobei die Stellgröße die Motorleistung zur Aufwendung der Presskräfte ist.

2. Verfahren nach Anspruch 1, **dadurch gekennzeichnet, dass** die Steuer- und/oder Regeleinheit (18) während eines Bezuges ein nicht konstantes und während des Bezuges veränderbares Profil von Sollwerten und/oder Sollwertbereichen bestimmt und danach die Steuerung oder Regelung vornimmt.

3. Verfahren nach Anspruch 1 oder 2, **dadurch gekennzeichnet, dass** die wenigstens eine physikalische Stoffeigenschaft die elektrische Leitfähigkeit des koffeinhaltigen Heißgetränks ist.

4. Verfahren nach einem der vorhergehenden Ansprüche, **dadurch gekennzeichnet, dass** die wenigstens eine Prozesseigenschaft die Brühdauer des koffeinhaltigen Heißgetränks ist.

5. Verfahren nach einem der vorhergehenden Ansprüche, **dadurch gekennzeichnet, dass** die wenigstens eine Prozesseigenschaft die Temperatur des koffeinhaltigen Heißgetränks ist.

6. Verfahren nach einem der vorhergehenden Ansprüche 3 oder 4, **dadurch gekennzeichnet, dass** zur Erstellung der Regel- und/oder Stellgröße der Istwert der elektrischen Leitfähigkeit und/oder der Istwert einer ermittelten Temperatur des koffeinhaltigen Heißgetränks gegenüber einem jeweiligen Sollwert verglichen werden und dass die Bestimmung in Abhängigkeit von diesem Vergleich erfolgt.

7. Verfahren nach einem der vorhergehenden Ansprüche, **dadurch gekennzeichnet, dass** die wenigstens eine von einer physikalischen Stoffeigenschaft abhängige physikalische Größe der Brechungsindex des koffeinhaltigen Heißgetränks ist.

8. Verfahren nach einem der vorhergehenden Ansprüche, **dadurch gekennzeichnet, dass** die wenigstens eine Prozesseigenschaft die Brühdauer ist.

9. Verfahren nach einem der vorhergehenden Ansprüche, **dadurch gekennzeichnet, dass** ein ergänzendes Zuleiten von Wasser, insbesondere von heißem Wasser aus dem Boiler (7), in das zubereitete Getränk nach der Brüheinheit (10) erfolgt, wobei die Stellgröße das Volumen des Wassers ist oder die Zeit ist, mittels welcher ein im Wesentlichen konstanter Volumenstrom an Wasser zugeführt wird.

10. Verfahren nach Anspruch 9, **dadurch gekennzeichnet, dass** die Stellgröße das Volumen des Wassers ist und dass das ergänzende Beimischen von Wasser nach der Brühkammer (10) in Abhängigkeit von der zumindest einen gemessene Stoffeigenschaft und/oder der davon abhängigen physikalischen Größe erfolgt.

11. Verfahren nach einem der vorhergehenden Ansprüche, **dadurch gekennzeichnet, dass** das Einstellen in Schritt C) derart erfolgt, dass ein Anfangsvolumen an koffeinhaltigen Heißgetränk umgeleitet und somit nicht in das Getränk eingeführt wird.

12. Verfahren nach einem der vorhergehenden Ansprüche, **dadurch gekennzeichnet, dass** das Beimischen von Wasser durch ein elektrisch verstellbares Stellglied (11), insbesondere durch ein elektrisch verstellbares Drosselventil, erfolgt.

13. Verfahren nach einem der vorhergehenden Ansprüche, **dadurch gekennzeichnet, dass** während der Extraktion ein Druck auf das Wasser bei dessen Durchleitung durch den gemahlenen Kaffee ausgeübt werden, wobei die Stellgröße vorzugsweise die Leistung der Wasserpumpe (3) ist.

14. Verfahren nach einem der vorhergehenden Ansprüche, **dadurch gekennzeichnet, dass** die Extraktion durch Steuerung auf einen Sollwertbereich zumindest einer oder mehrerer physikalischer Stoffeigenschaften, physikalischer Größen und/oder Prozesseigenschaften erfolgt.

15. Verfahren nach einem der vorhergehenden Ansprüche, **dadurch gekennzeichnet, dass** die Extraktion durch kontinuierliche Regelung auf einen Sollwertbereich zumindest einer oder mehrerer physikalischer Stoffeigenschaften, physikalischer Größen und/oder Prozesseigenschaften erfolgt.

16. Verfahren nach einem der vorhergehenden Ansprüche, **dadurch gekennzeichnet, dass** das die Steuerung und/oder Regelung durch Ermitteln eines Extraktionsprofils, und einen Vergleich mit zumindest einem Extraktionsprofil, welches als Sollwert-Datensatz auf dem Datenspeicher hinterlegt ist, erfolgt.

## Claims

1. Method by means of which caffeinated hot beverages, i.e. coffee beverages, are produced by an apparatus, in particular a beverage dispenser (1), for producing a caffeinated hot beverage, from water and a caffeinated raw material, in particular ground coffee, at least in a brewing unit (10) by extraction, wherein the device at least comprises
a) a water inlet of water with a first temperature T1 with a water pump (3) at a first flow rate;
b) a boiler (7) to heat the water to a second temperature T2, which is higher than the first temperature T1;
(c) a brewing unit (10) for extracting the coffee beverage from ground coffee;
d) at least one first measuring unit for determining at least one physical material property of the coffee beverage and/or a physical variable dependent thereon and optionally a process property;
e) a control and/or regulating unit (18) which is equipped for setting a control variable on the basis of the physical material property and/or the physical variable and optionally the process property, wherein the control and/or regulating unit (18) comprises a data memory on which data records of setpoint values and/or setpoint value ranges are stored according to the temperature and/or a desired caffeinated beverage and/or a supplied coffee type,
wherein the method further comprises at least the following steps:
A) determining the physical material property and/or the physical variable and optionally the process property of the caffeinated hot beverage by at least the first measuring unit (4 or 24);
B) carrying out a comparison by means of the control and/or regulating unit (18) between an actual value and a setpoint value range of this physical material property and/or the physical variable and optionally the process property, wherein the control and/or regulating unit (18) uses the data memory on which data records of setpoints and/or setpoint value ranges are stored according to the temperature and/or a desired caffeinated hot beverage and/or a supplied coffee type,
C) wherein, if the actual value is outside the setpoint value range, at least one regulating and/or manipulated variable is adjusted in the method by means of the control and/or regulating unit (18) such that a physical material property, in particular the aforementioned physical material property, of the dispensed caffeinated hot beverage is influenced in a controlled or regulated manner, and
D) wherein during extraction, pressing forces are exerted on the ground coffee, wherein the manipulated variable is the motor power to apply the pressing forces.

2. Method according to claim 1, **characterized in that** the control and/or regulating unit (18) determines a non-constant profile of setpoint values and/or setpoint value ranges which is variable during dispensing, and thereafter carries out the control or regulation.

3. Method according to claim 1 or 2, **characterized in that** the at least one physical material property is the electrical conductivity of the caffeinated hot beverage.

4. Method according to one of the preceding claims, **characterized in that** the at least one process property is the brewing time of the caffeinated hot beverage.

5. Method according to one of the preceding claims, **characterized in that** the at least one process property is the temperature of the caffeinated hot beverage.

6. Method according to one of the preceding claims 3 or 4, **characterized in that,** in order to produce the control and/or manipulated variable, the actual value of the electrical conductivity and/or the actual value of a determined temperature of the caffeinated hot beverage is compared with a respective setpoint value and **in that** the determination is made depending on this comparison.

7. Method according to one of the preceding claims, **characterized in that** the at least one physical variable dependent on a physical material property is the refractive index of the caffeinated hot beverage.

8. Method according to one of the preceding claims, **characterized in that** the at least one process property is the brewing time.

9. Method according to one of the preceding claims, **characterized in that** a supplementary supply of water, in particular hot water from the boiler (7), into the prepared beverage takes place after the brewing unit (10), wherein the manipulated variable is the volume of the water or the time by means of which a substantially constant volume flow of water is supplied.

10. Method according to claim 9, **characterized in that** the manipulated variable is the volume of water and **in that** the additional admixing of water after the brewing chamber (10) is carried out depending on the at least one measured material property and/or the physical variable dependent thereon.

11. Method according to one of the preceding claims, **characterized in that** the adjustment in step C) is carried out in such a way that an initial volume of caffeinated hot beverage is diverted and thus not introduced into the beverage.

12. Method according to one of the preceding claims, **characterized in that** the admixing of water is effected by an electrically adjustable actuating element (11), in particular by an electrically adjustable throttle valve.

13. Method according to one of the preceding claims, **characterized in that** during extraction a pressure is exerted on the water as it passes through the ground coffee, wherein the manipulated variable is preferably the power of the water pump (3).

14. Method according to one of the preceding claims, **characterized in that** the extraction is carried out by controlling to a setpoint value range of at least one or more physical material properties, physical variables and/or process properties.

15. Method according to one of the preceding claims, **characterized in that** the extraction is carried out by continuous regulation to a setpoint value range of at least one or more physical material properties, physical variables and/or process properties.

16. Method according to one of the preceding claims, **characterized in that** the control and/or regulation is carried out by determining an extraction profile, and a comparison with at least one extraction profile, which is stored as a setpoint value data record on the data memory.

## Revendications

1. Procédé pour produire des boissons chaudes contenant de la caféine, autrement dit des boissons au café, avec un dispositif, en particulier un distributeur automatique de boissons (1), destiné à produire une boisson chaude contenant de la caféine, à partir d'eau et d'une matière première contenant de la caféine, en particulier du café moulu, par extraction au moins dans une unité de percolation (10), lequel dispositif comporte au moins :
a) une arrivée d'eau à une première température T1 avec une pompe à eau (3) fonctionnant avec une première vitesse d'écoulement ;
b) une bouilloire (7) pour chauffer l'eau à une deuxième température T2 plus élevée que la première température T1 ;
c) une unité de percolation (10) destinée à extraire la boisson à base de café de café moulu ;
d) au moins une première unité de mesure pour déterminer au moins une propriété physique de substance de la boisson à base de café et/ou une grandeur physique dépendant de celle-ci et facultativement une propriété de processus ;
e) une unité de commande et/ou de régulation (18) qui est équipée pour ajuster une grandeur de commande à l'aide de la propriété physique de substance et/ou de la grandeur physique et facultativement de la propriété de processus, l'unité de commande et/ou de régulation (18) comportant une mémoire de données dans laquelle des ensembles de données de valeurs de consigne et/ou de plages de valeurs de consigne dépendant de la température et/ou d'une boisson contenant de la caféine souhaitée et/ou d'une sorte de café fournie sont enregistrés,
lequel procédé comprend en outre les étapes suivantes :
A) détermination de la propriété physique de substance et/ou de la grandeur physique et facultativement de la propriété de processus de la boisson chaude contenant de la caféine au moins par la première unité de mesure (4 ou 24) ;
B) exécution par l'unité de commande et/ou de régulation (18) d'une comparaison entre une valeur réelle et une plage de valeurs de mesure de cette propriété physique de substance et/ou de la grandeur physique et facultativement de la propriété de processus, l'unité de commande et/ou de régulation (18) utilisant la mémoire de données dans laquelle des ensembles de données de valeurs de consigne et/ou de plages de valeurs de consigne dépendant de la température et/ou d'une boisson contenant de la caféine souhaitée et/ou d'une sorte de café fournie sont enregistrés,
C) l'unité de commande et/ou de régulation (18) procédant, tant que la valeur réelle se situe en dehors de la plage de valeurs de mesure, à un ajustement d'au moins une grandeur de régulation et/ou de réglage du procédé, de telle manière qu'une propriété physique de substance, en particulier la propriété physique de substance susmentionnée, de la boisson chaude contenant de la caféine distribuée soit influencée dans le sens d'une commande ou d'une régulation, et
D) des forces de pressage étant exercées pendant l'extraction sur le café moulu, la grandeur de réglage étant la puissance du moteur pour l'application des forces de pressage.

2. Procédé selon la revendication 1, **caractérisé en ce que** l'unité de commande et/ou de régulation (18) détermine un profil non constant et modifiable pendant le soutirage de valeurs de consigne et/ou de plages de valeurs de mesure pendant un soutirage et procède ensuite à la commande ou à la régulation.

3. Procédé selon la revendication 1 ou 2, **caractérisé en ce que** l'au moins une propriété physique de substance est la conductivité électrique de la boisson chaude contenant de la caféine.

4. Procédé selon l'une des revendications précédentes, **caractérisé en ce que** l'au moins une propriété de processus est la durée de percolation de la boisson chaude contenant de la caféine.

5. Procédé selon l'une des revendications précédentes, **caractérisé en ce que** l'au moins une propriété de processus est la température de la boisson chaude contenant de la caféine.

6. Procédé selon l'une des revendications 3 ou 4, **caractérisé en ce qu'**afin de produire la grandeur de régulation et/ou de réglage, la valeur réelle de la conductivité électrique et/ou la valeur réelle d'une température déterminée de la boisson chaude contenant de la caféine sont comparées à une valeur de consigne correspondante et **en ce que** la détermination est effectuée en fonction de cette comparaison.

7. Procédé selon l'une des revendications précédentes, **caractérisé en ce que** l'au moins une grandeur physique dépendante d'une propriété physique de substance est l'indice de réfraction de la boisson chaude contenant de la caféine.

8. Procédé selon l'une des revendications précédentes, **caractérisé en ce que** l'au moins une propriété de processus est la durée de percolation.

9. Procédé selon l'une des revendications précédentes, **caractérisé en ce qu'**un apport complémentaire d'eau, en particulier d'eau chaude provenant de la bouilloire (7), dans la boisson préparée est réalisé en aval de l'unité de percolation (10), la grandeur de réglage étant le volume d'eau ou la durée pendant laquelle un débit volumique d'eau sensiblement constant est amené.

10. Procédé selon la revendication 9, **caractérisé en ce que** la grandeur de réglage est le volume d'eau et **en ce que** l'ajout complémentaire d'eau est effectué en aval de la chambre de percolation (10) en fonction de l'au moins une propriété de substance mesurée et/ou de la grandeur physique qui en dépend.

11. Procédé selon l'une des revendications précédentes, **caractérisé en ce que** l'ajustement est effectué dans l'étape C), de telle manière qu'on volume initial de boisson chaude contenant de la caféine est dérivé et ainsi n'est pas introduit dans la boisson.

12. Procédé selon l'une des revendications précédentes, **caractérisé en ce que** l'ajout d'eau est effectué par un organe de réglage (11) à actionnement électrique, en particulier par une vanne d'étranglement à actionnement électrique.

13. Procédé selon l'une des revendications précédentes, **caractérisé en ce que**, pendant l'extraction, une pression est exercée sur l'eau lors du passage de celle-ci à travers le café moulu, la grandeur de réglage étant de préférence la puissance de la pompe à eau (3).

14. Procédé selon l'une des revendications précédentes, **caractérisé en ce que** l'extraction est effectuée par la commande sur une plage de valeurs de mesure d'au moins une ou plusieurs propriétés physiques de substance, grandeurs physiques et/ou propriétés de processus.

15. Procédé selon l'une des revendications précédentes, **caractérisé en ce que** l'extraction est effectuée par une régulation en continu sur une plage de valeurs de mesure d'au moins une ou plusieurs propriétés physiques de substance, grandeurs physiques et/ou propriétés de processus.

16. Procédé selon l'une des revendications précédentes, **caractérisé en ce que** la commande et/ou la régulation sont effectuées par la détermination d'un profil d'extraction et une comparaison avec au moins un profil d'extraction qui est enregistré dans la mémoire de données sous la forme d'un ensemble de données de consigne.
